# EUROPÄISCHE PATENTSCHRIFT

(11) **EP 3 186 530 B1**
(45) Veröffentlichungstag und Bekanntmachung des Hinweises auf die Patenterteilung: **06.03.2019**
(21) Anmeldenummer: 15763218.3
(22) Anmeldetag: 21.08.2015
(51) Int. Cl.: F16G 1/08, B66B 7/06, F16G 1/28, F16G 5/06, F16G 5/20

(54) **RIEMEN FÜR DIE ANTRIEBSTECHNIK, INSBESONDERE RIEMENARTIGES ZUGELEMENT FÜR DIE AUFZUGSTECHNIK, MIT BRANDHEMMENDEN EIGENSCHAFTEN**
BELT FOR DRIVE SYSTEMS, IN PARTICULAR A BELT-LIKE TENSION ELEMENT FOR ELEVATOR SYSTEMS, WITH FLAME-RETARDANT PROPERTIES
COURROIE POUR LA TECHNIQUE D'ENTRAÎNEMENT, EN PARTICULIER ÉLÉMENT DE TRACTION DE TYPE COURROIE POUR LA TECHNIQUE D'ASCENSEUR, PRÉSENTANT DES PROPRIÉTÉS IGNIFUGE

(30) Priorität: 29.08.2014 DE 102014217309
(43) Veröffentlichungstag der Anmeldung: 05.07.2017
(73) Patentinhaber: Inventio AG, 6052 Hergiswil (CH); ContiTech Antriebssysteme GmbH, 30165 Hannover (DE)
(72) Erfinder: GÖSER, Hubert, 29451 Dannenberg (DE); BROCKE, Stephan, 22143 Hamburg (DE)
(86) Internationale Anmeldenummer: PCT/EP2015/069285
(87) Internationale Veröffentlichungsnummer: WO 2016/030298

(56) Entgegenhaltungen:
- WO-A1-2014/029377
- DE-A1-102007 042 917
- DE-A1-102012 110 769

## Beschreibung

Die Erfindung betrifft einen Riemen für die Antriebstechnik, bestehend wenigstens aus:
- einem Riemenkörper aus wenigstens einem polymeren Material mit elastischen und brandhemmenden Eigenschaften, umfassend eine Decklage als Riemenrücken und einen Unterbau mit einer Kraftübertragungszone; sowie
- einem in dem Riemenkörper eingebetteten Zugträger.

Derartige Riemen, die auch als Antriebsriemen oder Kraftübertragungsriemen bezeichnet werden, können als Flachriemen, Keilriemen, Keilrippenriemen, Zahnriemen oder als Verbundseile ausgebildet sein.

Die Elastizität eines Riemens wird dadurch erreicht, dass der Riemenkörper und somit die Decklage und der Unterbau aus einem polymeren Material mit elastischen Eigenschaften bestehen, wobei hier insbesondere die beiden Materialgruppen Elastomere und thermoplastische Elastomere zu nennen sind. Von besonderer Bedeutung sind Elastomere auf der Basis einer vulkanisierten Kautschukmischung, enthaltend wenigstens eine Kautschukkomponente und Mischungsingredienzien. Als Kautschukkomponente wird insbesondere Ethylen-Propylen-Kautschuk (EPM), Ethylen-Propylen-Dien-Kautschuk (EPDM), (teil)hydrierter Nitrilkautschuk (HNBR), Fluor-Kautschuk (FKM), Naturkautschuk (NR), Chloropren-Kautschuk (CR), Styrol-Butadien-Kautschuk (SBR), Butadien-Kautschuk (BR) oder Polyurethan (PU) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei HNBR, EPM, EPDM, PU oder ein EPM/EPDM-Verschnitt. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern zwecks Verstärkung, und Farbpigmente. Diesbezüglich wird auf den allgemeinen Stand der Kautschukmischungstechnologie verwiesen.

Der Riemen ist mit einem eingebetteten Zugträger versehen, der aus wenigstens einem in Riemenlängsrichtung verlaufenden Zugstrang gebildet ist. Zumeist bilden mehrere Zugstränge eine Zugträgerlage. Von besonderer Bedeutung ist dabei ein Zugstrang in Cordconstruktion, wobei es diesbezüglich nach dem Stand der Technik verschiedene Werkstoffkonzeptionen gibt. Die wesentlichen Werkstofftypen sind: Stahl, Polyamid (PA), Aramid, Polyester, Glasfasern, Kohlefasern, Basalt, Polyetheretherketon (PEEK), Polyethylentherephthalat (PET), Polybenzoxazol (PBO) oder Polyethylen-2,6-naphthalat (PEN). Der Zugstrang ist zudem zumeist mit einem Haftsystem, beispielsweise mit einem Resorcin-Formaldeyd-Latex (RFL), präpariert, so dass eine dauerwirksame Haftung zu dem umgebenden polymeren Material gewährleistet ist.

Bei endlos geschlossenen Riemen für den Fahrzeugbau spielt der Werkstoff Stahl zwischenzeitlich eine untergeordnete Rolle. Hier werden insbesondere Zugstränge aus PA, PET, Glas und / oder Basalt eingesetzt.

Bei den nicht endlos geschlossenen Riemen als Zugelement in der Aufzugstechnik - kommt jedoch dem Zugstrangwerkstoff Stahl, insbesondere in Form von Stahlcorden, wegen der hohen Zugkraft eine wesentliche Bedeutung zu.

Ein Problem bei Riemen aller Art ist, dass das polymere Material des Riemenkörpers sehr gut brennbar ist. Im Brandfall würde das gesamte Riemenkörpermaterial abbrennen und gegebenenfalls auch noch den Zugträger schädigen. Diese Problematik ist besonders relevant bei einem riemenartigen Zugelement für die Aufzugstechnik, bei dem dann der Stahlzugträger beschädigt werden kann. Auf jeden Fall wäre die Funktion und somit die Sicherheit des Aufzuges nicht mehr gegeben.

Aus WO2011/141068A1, WO 2014/072093A1 oder auch aus WO 2010/019150A1 ist bereits bekannt, das polymere Material eines Riemenkörpers, welches aus zwei verschiedenen Materialien besteht, mit brandhemmenden Additiven auszustatten. Insbesondere die in WO2011/141068A1 und WO 2014/072093A1 genannten Riemenaufbauten sind relativ komplex, erfordern besonderen Aufwand im Herstellungsprozess und sind somit auch vergleichsweise teuer.

Die Dokumente DE 10 2007 042917 A1 und WO 2014/029377 A1 beschreiben jeweils einen Riemen mit einem Riemenkörper, der teilweise, also nicht an allen Seiten, mit einer Beschichtung versehen ist.

Im Rahmen einer Weiterentwicklung besteht die Aufgabe der Erfindung darin, einen Riemen, insbesondere ein Zugelement für die Aufzugstechnik, bereitzustellen, bei dem das Riemenkörpermaterial sich durch eine weiterhin im Vergleich zum Stand der Technik gute brandhemmende Eigenschaften auszeichnet, und gleichzeitig der Riemenaufbau nicht komplexer wird.

Gelöst wird diese Aufgabe dadurch, dass der Riemenkörper aus wenigstens einem polymeren Material mit elastischen und brandhemmenden Eigenschaften besteht und der Riemenkörper vollständig mit einer Beschichtung versehen ist, die einlagig oder mehrlagig aufgebaut ist.

Überraschenderweise wurde gefunden, dass die brandhemmenden Eigenschaften durch einen derartig aufgebauten Riemen nicht negativ beeinflusst werden und der Riemen in einem einfachen Prozessschritt kostengünstig hergestellt werden kann.

Es ist insbesondere im Vergleich zu WO2011/141068A1, WO 2014/072093A1 kein mehrschichtiges Herstellverfahren mit Kautschukmischungen, die unterschiedliche Anteile an brandhemmenden Additiven haben, notwendig.

Als brandhemmende Additive kommen alle der fachkundigen Person bekannten so genannten Brandhemmer in Frage. Diese können bspw. ausgewählt sein aus der Gruppe, enthaltend: Melaminphosphat, Melaminpolyphosphat, Melamincyanurat, Ammoniumpolyphosphat, halogenierte organische Verbindungen (z.B.

Polytetrafluorethylen), organische Phosphorsäureester (z.B. Polyphosporsäurediester), organische Phosphonate, Polyphosphonate, roter Phosphor, Metallhydroxide (z.B. Calciumhydroxid, Magnesiumhydroxid, Aluminiumhydroxid), Metallcarbonate (z.B. Calciumcarbonat, Magnesiumcarbonat), Glaspulver und / oder Quarzpulver.

Dabei kann eine einzige Substanzklasse, beispielsweise ein Melaminphospat, oder ein Zwei- oder Mehr-Komponenten-System, beispielsweise ein Gemisch aus Melaminphosphat und Melamincyanurat, verwendet werden.

Die Additive sind dabei im Wesentlichen gleichmäßig in den üblichen Mengen in der Polymermatrix des Grundkörpers eingemischt.

Die Gesamtmenge an brandhemmenden Additiven beträgt bevorzugt 10 bis 30 Gew.-%, besonders bevorzugt 20 bis 30 Gew. -% und ganz besonders bevorzugt 25 bis 30 Gew.-%.

Der Riemenkörper ist vollständig mit der Beschichtung versehen sein. Die Beschichtung kann hierbei ein- oder mehrlagig sein.

Da die brandhemmenden Additive die mechanischen Eigenschaften des Riemenmaterials negativ beeinflussen, muss der Riemen insbesondere an den am meisten beanspruchten Stellen geschützt werden. Insbesondere der Unterbau mit seiner Kraftübertragungszone, die mit der Traktionsscheibe in Kontakt steht, ist am höchsten mechanisch beansprucht.

Als Material für die Beschichtung können alle der fachkundigen Person bekannten Beschichtungsmaterialien verwendet werden. Insbesondere die Verwendung einer Beschichtung auf der Basis wenigstens eines Polyurethans hat sich als vorteilhaft erwiesen. Besonders bevorzugt ist es hierbei wiederum, wenn das Polyurethan der Beschichtung identisch oder zumindest sehr ähnlich dem Polyurethan ist, welches vorzugsweise als Basis für den Riemenkörper dient. Dadurch ergibt sich eine besonders gute Anbindung und Verträglichkeit der Beschichtung. Die Shore-Härte des Polyurethans der Beschichtung und / oder des Riemenkörpers ist bevorzugt größer als 80 ShA, besonders bevorzugt größer als 88 ShA. Geeignete Polyurethane für die Beschichtung und / oder für den Riemenkörper sind bspw. Ether-PU oder Ester-PU.

Auf der Traktionsseite besitzt das Polyurethan vorzugsweise einen sehr guten Abriebwiederstand und einen ausreichend hohen (µ>0,2) Reibwert. Wird der Riemen auch über Rückenumlenkungen geführt, dann kann es von Vorteil sein, wenn die Beschichtung einen eher geringen Reibwert aufweist (µ<0,2).

Die Schichtstärke der Beschichtung beträgt bevorzugt 0,01mm bis 0,5mm, besonders bevorzugt 0,1mm bis 0,25mm.

Die Beschichtung wird während des Herstellprozesses auf den Riemen bevorzugt durch Aufsprühen, Aufpinseln, Aufrollen oder durch ein Tauchverfahren aufgebracht.

In einer bevorzugten Ausführungsvariante erfolgt zuerst die Herstellung des Riemens mit brandhemmenden und elastischen Eigenschaften und in wenigstens einem nachfolgenden Verfahrensschritt die Beschichtung des Riemens. Als Beschichtungsmaterial wird ein Polyurethan verwendet, welches auch als Material für den Riemenkörper dient und zur Sprüh- bzw. Streichfähigkeit zuvor in wenigstens einem Lösemittel gelöst wurde. Durch eine anschließende Trocknung wird das Lösemittel entfernt und das Polyurethan verbleibt auf dem Riemen als Beschichtung übrig. Dieser Vorgang kann gegebenenfalls zur Erhöhung der Schichtdicke mehrfach wiederholt werden.

Der Riemenkörper kann zusätzlich mit wenigstens einer eingebetteten Schicht versehen sein. Diese Schicht besteht insbesondere aus einem textilen Werkstoff in Form eines Gewebes, Gewirkes oder Gestrickes. Diese Schicht kann zudem brandhemmend ausgerüstet sein, indem beispielsweise die Textilfäden brandhemmend präpariert sind.

Der erfindungsgemäße Riemen wird insbesondere als Zugelement in der Aufzugstechnik verwendet, insbesondere unter Einsatz von Verbundseilen, eines Flachriemens oder Zahnriemens. Im Brandfall wird das Feuer nicht über das Zugelement über die Höhe des gesamten Aufzugsschachtes verteilt. Das so materialmäßig ausgerüstete Zugelement fängt sehr schlecht Feuer und zeigt keine Mängel in den mechanischen Eigenschaften. Der Aufzug bleibt bedingt funktionstüchtig. Ein weiterer Vorteil ist, dass ein derartiges Zugelement einen Gebäudebrand nicht von einer Etage auf die nächste Etage übertragen kann.

Die Erfindung wird nun anhand von eines Ausführungsbeispiels unter Bezugnahme auf eine schematische Zeichnung erläutert, ohne auf dieses Ausführungsbeispiel beschränkt zu sein. Es zeigt:

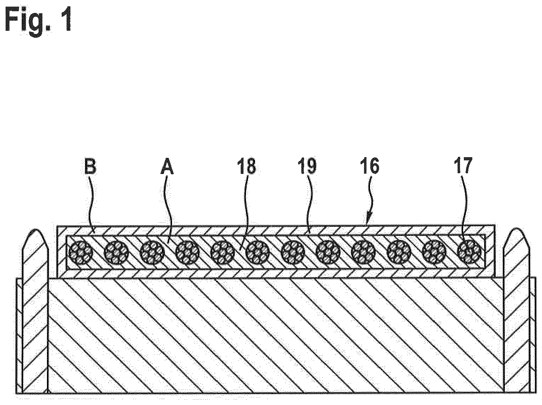

- Fig. 1: einen Riemen in Form eines Flachriemens mit Riemenkern und Riemenhülle als Zugelement für die Aufzugstechnik im Zusammenwirken mit einer unprofilierten Traktionsscheibe.

Fig. 1 zeigt einen Riemen 16 als Zugelement für die Aufzugstechnik, und zwar in Form eines Flachriemens. Das Material A ist bevorzugt ein Polyurethan und bildet den Riemenkern 18. Die Beschichtung 19 besteht aus einem Material B, welches ein mechanisch hoch belastbarer PU-Lack ist. Der Zugträger 17 ist dabei unter vollständiger Ummantelung des ersten Materials A im Riemenkern 18 eingebettet. Bei dem Zugträger 17 handelt es sich bevorzugt um Zugträger aus Stahl. Die Beschichtung 19 umgibt in dieser besonders bevorzugten Ausführungsform vollständig den Riemenkern 18.

## Patentansprüche

1. Riemen (16) für die Antriebstechnik, bestehend wenigstens aus einem elastischen und brandhemmenden Riemenkörper (A) aus einem polymeren Material (18) und wenigstens einem brandhemmenden Additiv, umfassend eine Decklage als Riemenrücken und einen Unterbau mit einer Kraftübertragungszone und einem in dem Riemenkörper eingebetteten Zugträger (17), wobei der Riemenkörper (A) vollständig mit einer Beschichtung (19) versehen ist, die einlagig oder mehrlagig aufgebaut ist,
**dadurch gekennzeichnet, dass** die Beschichtung (19) aus einem mechanisch hoch belastbaren PU-Lack besteht.

2. Riemen nach einem der Ansprüche 1, **dadurch gekennzeichnet, dass** als brandhemmendes Additiv Melaminphosphat und/oder Melaminpolyphosphat und/oder Melamincyanurat und/oder Ammoniumpolyphosphat und/oder eine hologenierte organische Verbindung und/oder ein organischer Phosphorsäureester und/oder ein organisches Phosphonat und/oder roter Phosphor und/oder ein Metallhydroxid und/oder ein Metallcarbonat und/oder Glaspulver und/oder Quarzpulver zum Einsatz gelangt.

3. Riemen nach einem der Ansprüche 1 oder 2, **dadurch gekennzeichnet, dass** der Riemen (16) als Flachriemen (16), Keilriemen, Keilrippenriemen, Zahnriemen oder als Verbundseile ausgebildet ist.

4. Verwendung eines Riemens (16) nach einem der Ansprüche 1 bis 3 als riemenartiges Zugelement für die Aufzugstechnik.

5. Verfahren zur Herstellung eines Riemens (16) gemäß Anspruch 1, **dadurch gekennzeichnet, dass** nach der Herstellung des Riemenkörpers (A) eine Beschichtung (19) vollständig auf den Riemenkörper (A) durch Aufsprühen, Aufpinseln, Aufrollen oder durch ein Tauchverfahren aufgebracht wird.

## Claims

1. A belt (16) for drive systems, consisting at least of an elastic and flame-retardant belt body (A) of a polymeric material (18) and at least one flame-retardant additive, comprising a cover layer in the form of a belt back, a substructure with a force transmission zone and a tension member (17) embedded in the belt body, wherein the complete belt body (A) is provided with a coating (19) that is composed of one or more layers,
**characterized in that** the coating (19) consists of a PU varnish, which highly resistant to mechanical stresses.

2. The belt according to claim 1, **characterized in that** the flame-retardant additive used consists of melamine phosphate and/or melamine polyphosphate and/or melamine cyanurate and/or ammonium polyphosphate and/or a halogenated organic compound and/or an organic phosphoric acid ester and/or an organic phosphonate and/or red phosphorus and/or a metal hydroxide and/or a metal carbonate and/or glass powder and/or quartz powder.

3. The belt according to claim 1 or 2, **characterized in that** the belt (16) is realized in the form of a flat belt (16), a V-belt, a ribbed V-belt, a synchronous belt or in the form of composite cables.

4. The utilization of a belt (16) according to one of claims 1-3 as a belt-like tension element for elevator systems.

5. A method for manufacturing a belt (16) according to claim 1, **characterized in that** a coating (19) is applied onto the complete belt body (A) by means of spraying, brushing, rolling or by means of an immersion method after the manufacture of the belt body (A).

## Revendications

1. Courroie (16), destinée à la technique d'entraînement, constituée au moins d'un corps de courroie (A) élastique et ignifugeant en une matière polymère (18) et d'au moins un additif ignifugeant, comprenant une couche de couverture faisant office de dos de courroie et une substructure pourvue d'une zone de transmission de force et un support de traction (17) incorporé dans le corps de courroie, le corps de courroie (A) étant entièrement muni d'un revêtement (19) qui est conçu en monocouche ou en multicouches, **caractérisée en ce que** le revêtement (19) est constitué d'un vernis PU supportant des contraintes mécaniques élevées.

2. Courroie selon la revendication 1, **caractérisée en ce qu'**en tant qu'additif ignifugeant, on utilise un phosphate de mélamine et/ou un polyphosphate de mélamine et/ou un cyanurate de mélamine et/ou un polyphosphate d'ammonium et/ou un composé organique halogéné et/ou un ester organique d'acide phosphorique et/ou un phosphonate organique et/ou un phosphore rouge et/ou un hydroxyde métallique et/ou un carbonate métallique et/ou une poudre de verre et/ou une poudre de quartz.

3. Courroie selon l'une quelconque des revendications 1 ou 2, **caractérisée en ce que** la courroie (16) est conçue sous la forme d'une courroie plate (16), d'une courroie trapézoïdale, d'une courroie trapézoïdale à nervures, d'une courroie dentée ou de câbles composites.

4. Utilisation d'une courroie (16) selon l'une quelconque des revendications 1 à 3 comme élément de traction de type courroie, destiné à la technique des ascenseurs.

5. Procédé, destiné à la fabrication d'une courroie (16) selon la revendication 1, **caractérisé en ce qu'**après la fabrication du corps de courroie (A), on applique un revêtement (19) sur la totalité du corps de courroie (A) par vaporisation, badigeonnage, application au rouleau ou par un procédé d'immersion.
